# FASCICULE DE BREVET EUROPEEN

(11) **EP 0 379 820 B1**
(45) Date de publication et mention de la délivrance du brevet: **03.02.1993**
(21) Numéro de dépôt: 89403588.0
(22) Date de dépôt: 20.12.1989
(51) Int. Cl.: C02F 1/78, C02F 1/72

(54) **Appareil pour la dissolution d'ozone dans un fluide**
Vorrichtung zum Lösen von Ozon in einem Fluidum
Apparatus for dissolving ozone in a fluid

(30) Priorité: 23.12.1988 FR 8817134
(43) Date de publication de la demande: 01.08.1990
(73) Titulaire: LYONNAISE DES EAUX - DUMEZ, F-92000 Nanterre (FR)
(72) Inventeur: Duguet, Jean-Pierre, F-78230 Le Pecq (FR)
(74) Mandataire: Armengaud Ainé, Alain

(56) Documents cités:
- FR-A- 2 545 732
- FR-A- 2 563 208
- US-A- 4 332 687

## Description

Le brevet européen 0 125 162 déposé le 18 avril 1984 sous priorité française FR-A-2545 732 concerne un appareil pour la dissolution d'ozone dans un fluide par injection dans ce fluide d'air ozoné ou d'un gaz tel qu'oxygène ozoné, utilisable en particulier pour le traitement à l'ozone d'eau, notamment d'eau destinée à la consommation humaine.

Cet appareil comporte au moins un tube disposé verticalement dans une enceinte tubulaire verticale et communiquant avec cette enceinte par son extrémité inférieure et par son extrémité supérieure avec une canalisation d'amenée du fluide à traiter et avec des canalisations amenant de l'air ozoné, ou du gaz ozoné ; l'enceinte tubulaire verticale est fermée à ses deux extrémités et munie de moyens pour l'évacuation du fluide traité et de l'air, ou de gaz, ozoné en excès, et de moyens pour l'introduction d'un fluide annexe, notamment un catalyseur.

La présente invention vise particulièrement l'utilisation d'un tel appareil pour la dissolution dans le fluide, notamment l'eau, à traiter, non seulement d'ozone, mais de tout composé susceptible de libérer des radicaux hydroxyle, en particulier de peroxyde d'hydrogène.

Les progrès dans la connaissance de la chimie de l'ozone, ont permis de mettre en évidence deux voies principales d'oxydation par l'ozone : la réaction directe par l'ozone moléculaire O₃ et la réaction par la voie dite "radicalaire", en particulier les réactions d'oxydation par le radical hydroxyle (OH).

L'ozone moléculaire a un potentiel d'oxydation élevé mais les réactions sont très sélectives et généralement lentes. Dans le cas du radical hydroxyle, le potentiel d'oxydation est supérieur à celui de l'ozone et les réactions sont rapides mais peu sélectives. De ce fait, l'oxydation radicalaire peut aller jusqu'à la minéralisation complète des matières organiques que l'on veut éliminer du fluide à traiter.

Ces radicaux peuvent être générés par différents systèmes tels que l'ozonation à pH basique, les combinaisons O₃/UV, O₃/H₂O₂,H₂O₂/UV.

Après étude en laboratoire de ces systèmes, l'oxydation par O₃/H₂O₂ a été testée avec succès pour la dépollution d'eau et a été retenue.

US-A-4332687 décrit un procédé de traitement d'eaux par l'ozone qui consiste à introduire une petite quantité de peroxyde d'hydrogène dans la cuve de traitement. Cependant, cette publication ne décrit aucun moyen permettant de mettre en oeuvre un tel procédé.

Selon FR-A-2 563 208 le traitement des eaux par l'ozone peut être effectué en ajoutant, à un moment précis du traitement, à l'eau ozonée, une solution d'un peroxyde avant de poursuivre le traitement par l'ozone. Cependant, habituellement et selon une technique plus récente et donc encore peu répandue, l'oxydation radicalaire se fait en utilisant une cuve d'ozonation classique, le peroxyde d'hydrogène étant mélangé à l'eau à traiter avant passage dans la cuve.

Cependant, cette façon d'opérer ne permet pas d'optimiser l'action du peroxyde d'hydrogène tout en réduisant sa consommation.

Dans ce but, il convient en effet :
- dans un premier temps, de réaliser une oxydation par l'ozone seule pour éliminer les matières facilement oxydables par l'ozone et en effectuant l'oxydation radicalaire dans un deuxième temps pour éliminer les matières ayant résisté à l'action de l'ozone,
- compte tenu du fait que des réactions parasites se produisent lors de l'oxydation radicalaire, entre les radicaux libres et le peroxyde d'hydrogène, il existe une concentration optimale en peroxyde d'hydrogène qui permet une oxydation optimale des matières organiques tout en mettant en oeuvre la quantité minimale de peroxyde d'hydrogène maintenant une concentration optimale en peroxyde d'hydrogène dans l'appareil où a lieu l'oxydation. Il est donc nécessaire d'effectuer une introduction dans l'appareil du peroxyde d'hydrogène avec une répartition optimale dans l'espace et donc dans le temps.

Enfin, si les réactions d'oxydation radicalaires sont très rapides, il n'en est pas de même, de la vitesse de transfert de l'ozone dans l'eau. En l'espèce, la dissolution de l'ozone est, pour le résultat global dans le temps, le seul facteur limitant et, si l'on peut disposer d'un appareil où l'opération s'effectue le plus rapidement possible, la réaction sera au total, améliorée et le volume de l'appareil réduit.

Partant de l'état de la technique constitué par FR-A 2 545 732 l'invention apporte un appareil permettant de satisfaire ces différentes conditions et désirata. A cet effet, l'invention concerne un appareil pour la dissolution d'ozone dans un fluide tel que l'eau, en vue de son traitement par l'ozone, par injection dans ce fluide d'air ozoné ou d'un gaz ozoné, comportant un faisceau pour la dissolution d'ozone dans un fluide tel que l'eau, en vue de son traitement par l'ozone, par injection dans ce fluide d'air ozoné ou d'un gaz ozoné, comportant un faisceau d' au moins un tube disposé verticalement dans une enceinte tubulaire verticale, chaque tube communiquant avec cette enceinte par son extrémité inférieure et par son extrémité supérieure avec une canalisation d'amenée du fluide à traiter et au moins une canalisation amenant de l'air ozoné ou du gaz ozoné, ladite enceinte tubulaire verticale étant fermée à ses deux extrémités et munie de moyens pour l'évacuation du fluide traité et de l'air, ou du gaz, ozoné en excès, chaque tube étant équipé de moyens destinés à l'injection de peroxyde d'hydrogène, de façon à compléter la réaction d'oxydation par voie radicalaire caractérisé en ce que les moyens assurant l'injection de péroxyde d'hydrogène sont constitués par des tubes ou cannes plongeant verticalement dans le tube véhiculant le fluide à traiter et disposés de telle façon que l'injection de péroxyde d'hydrogène ait lieu après un traitement partiel du liquide à traiter avec l'ozone.

L'invention, selon un second aspect, concerne un appareil pour la dissolution d'ozone dans un fluide tel que l'eau, en vue de son traitement par l'ozone, par injection dans ce fluide d'air ozoné ou d'un gaz ozoné, comportant un faisceau d'au moins un tube disposé verticalement dans une enceinte tubulaire verticale, chaque tube communiquant avec cette enceinte par son extrémité inférieure et par son extrémité supérieure avec une canalisation d'amenée du fluide à traiter et au moins une canalisation amenant de l'air ozoné ou du gaz ozoné, ladite enceinte tubulaire verticale étant fermée à ses deux extrémités et munie de moyens pour l'évacuation du fluide traité et de l'air, ou du gaz, ozoné en excès, et de moyens destinés à l'injection de peroxyde d'hydrogène, de façon à compléter la réaction d'oxydation par voie radicalaire caractérisé en ce que les moyens assurant l'injection de peroxyde d'hydrogène, sont constitués par des couronnes alimentées en péroxyde d'hydrogène et percées d'orifices débouchant dans l'espace situé entre les tubes et l'enceinte qui les contient, les dimensions et/ou l'étagement de ces orifices étant choisis de façon à obtenir l'injection optimale du peroxyde d'hydrogène.

La conception de cet appareil permet d'obtenir des rendements dans la dissolution d'ozone, de 85 à 100% pour un temps de contact extrêmement court, de l'ordre de 1 minute, ce qui revient à dire qu'un tel appareil permet de réduire au minimum dans le temps le transfert de l'ozone et donc améliore l'oxydation des matières organiques indésirables.

En outre, il se prête particulièrement bien à une injection étagée et harmonieusement répartie du peroxyde d'hydrogène dans le flux de liquide déjà traité par l'ozone.

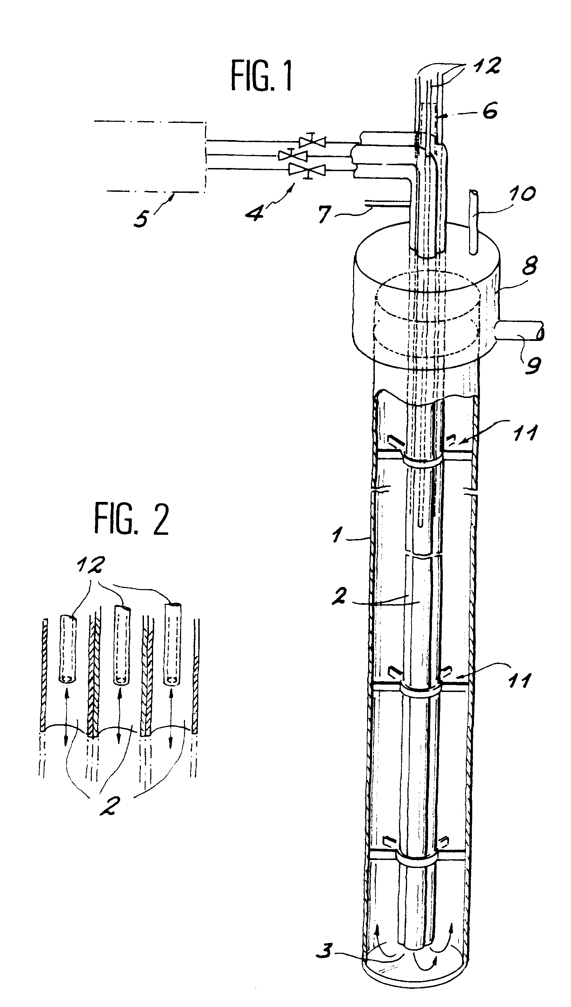

Une telle injection peut être réalisée par tout moyen quelconque convenable. On a décrit ci-après, à titre d'exemple non limitatif, un dispositif d'injection, en référence aux Figures 1 et 2 du dessin annexé.

L'appareil est constitué par une enceinte tubulaire verticale fermée 1 dans laquelle plonge un faisceau de tubes verticaux 2 communiquant par leur extrémité inférieure 3 avec l'enceinte et, par des vannes tout ou rien 4 avec la canalisation 5 d'amenée d'eau à traiter.

L'air ozoné ou le gaz ozoné est introduit dans la partie supérieure de chaque tube par des canalisations 6.

Il est prévu, à proximité de l'extrémité inférieure ou supérieure du faisceau tubulaire, une canalisation 7 pour l'introduction d'un fluide annexe, tel que par exemple un catalyseur.

Des pales 11 fixent le faisceau de tubes à la paroi de l'enceinte 1 et assurent en outre un mouvement de rotation du fluide remontant dans l'enceinte à sa sortie du faisceau de tubes, ce qui augmente le temps de contact entre l'air ozoné ou le gaz ozoné avec le fluide à traiter.

Conformément à l'invention, le peroxyde d'hydrogène est amené à l'appareil par des tubes ou cannes 12, de même longueur dans l'exemple traité, plongeant, comme on le voit particulièrement sur la Figure 2, dans les tubes verticaux 2 véhiculant l'eau à traiter et dans lesquels débouchent également les canalisations amenant l'ozone en vue de son transfert dans l'eau.

Les cannes peuvent également être de longueur différente, ce qui permet d'introduire le peroxyde d'hydrogène aux niveaux choisis pour réaliser l'étagement voulu de son injection dans le courant d'eau ozonée.

Dans l'exemple décrit et représenté, l'injection du peroxyde d'hydrogène a lieu dans la branche descendante de l'appareil. Elle peut également être réalisée dans sa branche ascendante, c'est-à-dire dans l'espace annulaire compris entre les tubes 2 et l'enceinte 1.

On peut alors utiliser un système d'injection constitué par une ou des couronnes (non représentées), étagées, ces couronnes étant munies d'orifices et entourant l'enceinte 1. Ces couronnes sont alimentées en peroxyde d'hydrogène par une pompe classique. Le diamètre de leurs orifices est calculé de façon à optimiser les quantités de peroxyde d'hydrogène injectées, par exemple à chaque étage.

Cependant il va de soi que l'injection du peroxyde d'hydrogène peut être réalisée à la fois dans la branche descendante et dans la branche ascendante de l'appareil au même niveau, ou à des niveaux différents dans chaque branche.

## Revendications

1. Appareil pour la dissolution d'ozone dans un fluide tel que l'eau, en vue de son traitement par l'ozone, par injection dans ce fluide d'air ozoné ou d'un gaz ozoné, comportant un faisceau d' au moins un tube (2) disposé verticalement dans une enceinte tubulaire verticale (1) chaque tube (2) communiquant avec cette enceinte par son extrémité inférieure (3) et par son extrémité supérieure avec une canalisation (5) d'amenée du fluide à traiter et au moins une canalisation (6) amenant de l'air ozoné ou du gaz ozoné, ladite enceinte tubulaire verticale étant fermée à ses deux extrémités et munie de moyens (8-9) pour l'évacuation du fluide traité et de l'air, ou du gaz, ozoné en excès, chaque tube (2) étant équipé de moyens destinés à l'injection de peroxyde d'hydrogène, de façon à compléter la réaction d'oxydation par voie radicalaire caractérisé en ce que les moyens assurant l'injection de péroxyde d'hydrogène sont constitués par des tubes ou cannes (12) plongeant verticalement dans le tube (2) véhiculant le fluide à traiter et disposés de telle façon que l'injection de péroxyde d'hydrogène ait lieu après un traitement partiel du liquide à traiter avec l'ozone.

2. Appareil pour la dissolution d'ozone dans un fluide tel que l'eau, en vue de son traitement par l'ozone, par injection dans ce fluide d'air ozoné ou d'un gaz ozoné, comportant un faisceau d'au moins un tube (2) disposé verticalement dans une enceinte tubulaire verticale (1) chaque tube communiquant avec cette enceinte par son extrémité inférieure (3) et par son extrémité supérieure avec une canalisation (5) d'amenée du fluide à traiter et au moins une canalisation (6) amenant de l'air ozoné ou du gaz ozoné, ladite enceinte tubulaire verticale étant fermée à ses deux extrémités et munie de moyens (8-9) pour l'évacuation du fluide traité et de l'air, ou du gaz, ozoné en excès, et de moyens destinés à l'injection de peroxyde d'hydrogène, de façon à compléter la réaction d'oxydation par voie radicalaire caractérisé en ce que les moyens assurant l'injection de peroxyde d'hydrogène sont constitués par des couronnes alimentées en péroxyde d'hydrogène et percées d'orifices débouchant dans l'espace situé entre les tubes (2) et l'enceinte (1) qui les contient, les dimensions et/ou l'étagement de ces orifices étant choisis de façon à obtenir l'injection optimale du peroxyde d'hydrogène.

## Patentansprüche

1. Vorrichtung zum Lösen von Ozon in einem Fluidum, wie z.B. Wasser, hinsichtlich dessen Behandlung mit Ozon durch Einspritzen von ozonisierter Luft oder eines ozonisierten Gases in dieses Fluidum, bestehend aus einem Bündel aus mindestens einem vertikal in einem rohrförmigen vertikalen Gehäuse (1) angeordneten Rohr (2), wobei jedes Rohr (2) durch sein unteres Ende (3) mit diesem Gehäuse und durch sein oberes Ende mit einer Zufuhrkanalisation (5) für das zu behandelnde Fluidum und mindestens einer ozonisierte Luft oder ozonisiertes Gas zuführenden Kanalisation (6) verbunden ist, und wobei das rohrförmige vertikale Gehäuse an beiden Enden geschlossen und mit einer Einrichtung (8-9) zum Abführen des behandelten Fluidums und der überschüssigen ozonisierten Luft oder des überschüssigen ozonisierten Gases versehen ist, und wobei jedes Rohr (2) mit einer Einrichtung zum Einspritzen von Wasserstoff-Peroxid ausgestattet ist, so daß die Oxidations-Reaktion auf radikalartigem Wege vervollständigt wird, **dadurch gekennzeichnet, daß** die das Einspritzen von Wasserstoff-Peroxid gewährleistende Einrichtung von vertikal in das Rohr (2) führenden Rohren oder Rohrelementen (12) gebildet ist, die das zu behandelnde Fluidum transportieren und so angeordnet sind, daß die Einspritzung von Wasserstoff-Peroxid nach einer teilweisen Behandlung des zu behandelnden Fluidums mit Ozon stattfindet.

2. Vorrichtung zum Lösen von Ozon in einem Fluidum, wie z.B. Wasser, hinsichtlich dessen Behandlung mit Ozon durch Einspritzen von ozonisierter Luft oder eines ozonisierten Gases in dieses Fluidum, bestehend aus einem Bündel aus mindesten einem vertikal in einem rohrförmigen vertikalen Gehäuse (1) angeordneten Rohr (2), wobei jedes Rohr (2) durch sein unteres Ende (3) mit diesem Gehäuse und durch sein oberes Ende mit einer Zufuhrkanalisation (5) für das zu behandelnde Fluidum und mindestens einer ozonisierte Luft oder ozonisiertes Gas zuführenden Kanalisation (6) verbunden ist, und wobei das rohrförmige vertikale Gehäuse an beiden Enden geschlossen und mit einer Einrichtung (8-9) zum Abführen des behandelten Fluidums und der überschüssigen ozonisierten Luft oder des überschüssigen ozonisierten Gases und einer Einrichtung zum Einspritzen von Wasserstoff-Peroxid zur Vervollständigung der Oxidations-Reaktion auf radikalartigem Wege versehen ist, **dadurch gekennzeichnet, daß** die das Einspritzen von Wasserstoff-Peroxid gewährleistende Einrichtung durch kranzartige Fassungen gebildet ist, denen Wasserstoff-Peroxid zugeführt wird, und die mit Öffnungen versehen sind, die in den zwischen den Rohren (2) und dem diese enthaltenden Gehäuse (1) liegenden Zwischenraum münden, wobei die Abmessungen und/oder die Abstufung dieser Öffnungen so gewählt sind, daß eine optimale Einspritzung des Wasserstoff-Peroxid gewährleistet ist.

## Claims

1. Apparatus for dissolving ozone in a fluid such a water, for the purpose of treating it with the ozone, by injection into this fluid of ozonised air or an ozonized gas, the apparatus comprising a bundle of at least one tube (2) disposed vertically in a vertical tubular enclosure (1), each tube (2) communicating at its lower end (3) with this enclosure and at its upper end with a piping system (5) for supplying the fluid to be treated and at least one piping system (6) supplying ozonized air or ozonized gas, said vertical tubular enclosure being closed at both its ends and equipped with means (8-9) for the removal of the treated fluid and of the excess ozonized air or gas, each tube (2) being equipped with means intended for the injection of hydrogen peroxide, in such a way as to complete the oxidizing reaction by a process giving rise to free radicals, characterized in that the means for assuring the injection of hydrogen peroxide are constituted of tubes or small pipes (12) descending vertically into the tube (2) carrying the fluid to be treated and disposed in such a manner that the injection of hydrogen peroxide takes place after a partial treatment of the liquid to be treated with the ozone.

2. Apparatus for dissolving ozone in a fluid such a water, for the purpose of treating it with the ozone, by injection into this fluid of ozonized air or an ozonized gas, the apparatus comprising a bundle of at least one tube (2) disposed vertically in a vertical tubular enclosure (1), each tube communicating at its lower end (3) with this enclosure and at its upper end with a piping system (5) for supplying the fluid to be treated and at least one piping system (6) supplying/ozonized air ozonized air or ozonized gas, said vertical tubular enclosure being closed at both its ends and equipped with means (8-9) for the removal of the treated fluid and of the excess ozonized air or gas, and with means intended for the injection of hydrogen peroxide, in such a way as to complete the oxidizing reaction by a process giving rise to free radicals, characterized in that the means for assuring the injection of the hydrogen peroxide are constituted of rings supplied with hydrogen peroxide and perforated by orifices leading into the space situated between the tubes (2) and the enclosure (1) containing them, the dimensions and/or the arrangement of these orifices being chosen in such a way as to achieve the optimum injection of the hydrogen peroxide.
